# EUROPEAN PATENT APPLICATION

(11) **EP 3 073 390 A1**
(43) Date of publication of application: **28.09.2016**
(21) Application number: 16152542.3
(22) Date of filing: 25.01.2016
(51) Int. Cl.: G06F 17/22

(54) **DOCUMENT CHECKING DEVICE, METHOD, AND PROGRAM**

(30) Priority: 26.03.2015 JP 2015064889
(71) Applicant: FUJITSU LIMITED, Kawasaki-shi, Kanagawa 211-8588 (JP)
(72) Inventor: Yamaoka, Yuji, Kanagawa, 211-8588 (JP)
(74) Representative: Hoffmann Eitle

(57) **Abstract**

A document checking device includes: a generation unit configured to generate, for each of character strings, a list including feature elements in the corresponding one of the character strings; a dividing unit configured to divide, based on a hash value calculated from at least one of feature elements included in the list, the list into blocks each including one or more feature elements; a calculation unit configured to obtain a hash value for each of the blocks; and a comparison unit configured to compare the hash values obtained by the calculation unit between the character strings.

## Description

### [FIELD]

The present invention discussed herein is related to a technology for verifying a similarity between documents.

### [BACKGROUND]

It is possible to sense whether or not a piece of text data is diverted from another piece of text data, by comparing feature amounts of these pieces of text data. The term "feature amount" means data corresponding to a feature of text data and is extracted from the text data.

By using the feature amount, it is possible to efficiently sense, for example, taking out of confidential data. By preliminarily registering, for example, a feature amount of the confidential data and comparing the feature amount of the confidential data with a feature amount of data suspected to be taken out, it is possible to efficiently sense that taking out thereof is performed.

Regarding comparison between pieces of data, which utilizes feature amounts, the following technologies have been known. A literature discloses, for example, a technology for determining, based on a hash code calculated from a key sentence included in communication data and a hash code calculated from a sentence included in a confidential document, whether confidential information is included in the communication data. According to this technology, by determining a coincidence between the hash codes, it is possible to sense diversion. Therefore, processing is speeded up. On the other hand, since being performed in units of sentences, comparison is easily influenced by a difference between writing forms (for example, the presence or absence of punctuation marks or spaces, or the like), and a sensing failure easily occurs.

In addition, a literature discloses a technology for determining a similarity between documents by comparing hash values calculated from keywords in pieces of text data. In this technology, since being performed in units of keywords, comparison is less likely to be influenced by a difference between writing forms, and a sensing failure is less likely to occur. In addition, by changing the number of used keywords, it is possible to easily change the size of a feature amount calculated for each of documents (here, the total size of hash values). On the other hand, by just performing comparison in units of keywords, it is difficult to determine whether taking out is really performed, and another processing operation for calculating, for example, the degree of similarity turns to be performed. Therefore, it takes time to perform processing.

Like the technologies described in the above-mentioned literatures, it is hardly said that technologies described in other literatures have comprehensive advantages.

### [CITATION LIST]

### [PATENT LITERATURE]

[PATENT LITERATURE 1] Japanese Laid-open Patent Publication No. 2006-065837
[PATENT LITERATURE 2] Japanese Laid-open Patent Publication No. 2010-182238
[PATENT LITERATURE 3] Japanese Laid-open Patent Publication No. 2010-231766

### [SUMMARY]

### [TECHNICAL PROBLEM]

As for objects of the present technology, one aspect thereof is to provide a technology for highly accurately verifying a similarity between documents at high speed.

### [SOLUTION TO PROBLEM]

According to an aspect of the invention, a document checking device includes: a generation unit configured to generate, for each of character strings, a list including feature elements in the corresponding one of the character strings; a dividing unit configured to divide, based on a hash value calculated from at least one of feature elements included in the list, the list into blocks each including one or more feature elements; a calculation unit configured to obtain a hash value for each of the blocks; and a comparison unit configured to compare the hash values obtained by the calculation unit between the character strings.

### [ADVANTAGEOUS EFFECTS OF INVENTION]

According to one aspect, it becomes possible to highly accurately verify a similarity between documents at high speed.

### [BRIEF DESCRIPTION OF DRAWINGS]

FIG. 1 is a functional block diagram of an information processing device in a first embodiment;
FIG. 2 illustrates an example of data stored in a document data storage unit;
FIG. 3 illustrates a main processing flow in the first embodiment;
FIG. 4 illustrates an example of a list stored in a list storage unit;
FIG. 5 illustrates an example of a list stored in a sub-list storage unit;
FIG. 6 illustrates an example of data stored in a feature data storage unit;
FIG. 7 illustrates examples of data and a document ID of a document;
FIG. 8 illustrates an example of data stored in the feature data storage unit;
FIG. 9 illustrates examples of data and a document ID of a document;
FIG. 10 illustrates a processing flow of processing performed by an extraction unit;
FIG. 11 illustrates an example of data stored in an extraction result storage unit;
FIG. 12 is a functional block diagram of a document checking device in a second embodiment;
FIG. 13 illustrates a main processing flow in the second embodiment; and
FIG. 14 is a functional block diagram of a computer.

### [DESCRIPTION OF EMBODIMENTS]

A feature amount is evaluated from both an accuracy aspect and an efficiency aspect.

In the accuracy aspect, the robustness of the feature amount is evaluated. The term "robustness" means a characteristic capable of sensing performing of diversion even if raw data does not completely coincide, and it is realistically desirable that the feature amount has some degree of robustness. In a case of, for example, a business document, while periods are used as sentence delimiters in an article format, the business document is itemized in units of sentences in a slide format in many cases. Accordingly, it is desirable that the feature amount has some degree of robustness whose level is able to sense diversion regardless of a method for a sentence delimiter. In addition, if automatic file format conversion (for example, portable document format (PDF) conversion) is performed, the appearance order of sentences is changed or the number of space characters increases in some cases. However, it is desirable to have some degree of robustness whose level is able to sense diversion in such a case.

In the efficiency aspect, a comparison efficiency and ease of size adjustment are evaluated. The term "comparison efficiency" means an efficiency at the time of determining another piece of text data from which a piece of text data is diverted, and a time taken to perform the determination decreases with an increase in the comparison efficiency. The term "the ease of size adjustment" means ease of changing the size of the feature amount. In a case of intending to reduce the size of the feature amount to, for example, about 10% of the size of original text data, it is desirable that it is possible to easily realize.

In embodiments illustrated hereinafter, a method for extracting, from text data, a feature amount having comprehensive advantages in three evaluation viewpoints of robustness, a comparison efficiency, and size adjustment and a comparison method for feature amounts will be described.

### [First Embodiment]

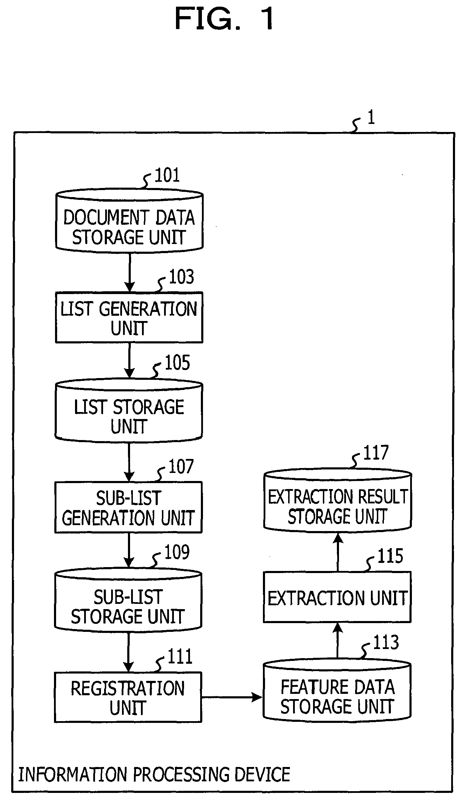

FIG. 1 illustrates a functional block diagram of an information processing device 1 in a first embodiment. The information processing device 1 includes a document data storage unit 101, a list generation unit 103, a list storage unit 105, a sub-list generation unit 107, a sub-list storage unit 109, a registration unit 111, a feature data storage unit 113, an extraction unit 115, and an extraction result storage unit 117.

The list generation unit 103 performs processing, based on data stored in the document data storage unit 101, and stores a processing result in the list storage unit 105. The sub-list generation unit 107 performs, based on data stored in the list storage unit 105, and stores a processing result in the sub-list storage unit 109. The registration unit 111 performs processing, based on data stored in the sub-list storage unit 109, and stores a processing result in the feature data storage unit 113. The extraction unit 115 performs processing, based on data stored in the feature data storage unit 113, and stores a processing result in the extraction result storage unit 117.

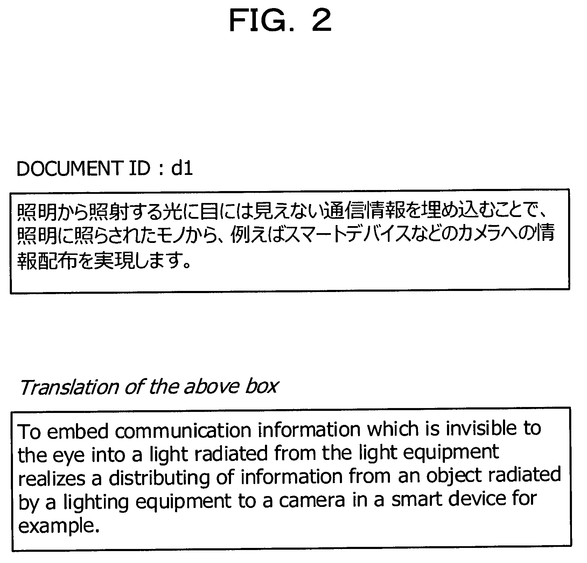

FIG. 2 illustrates an example of data stored in the document data storage unit 101. In the example of FIG. 2, data and a document identifier (ID) of a document are stored. While, in the example of FIG. 2, data is stored for one document, data may be stored in the document data storage unit 101 for documents. The data of the document is identified by the document ID. The data of the document includes text data, other metadata, and so forth.

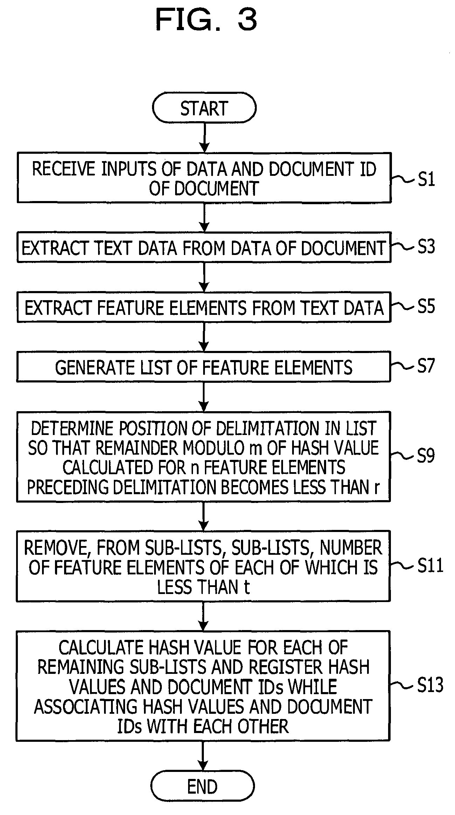

Next, using FIG. 3 to FIG. 11, processing performed by the information processing device 1 will be described. It is assumed that, before the processing is started, data stored in the list storage unit 105 and data stored in the sub-list storage unit 109 are deleted.

First, the list generation unit 103 receives inputs of data and a document ID of a document from a user of the information processing device 1 and stores the data and the document ID in the document data storage unit 101 (FIG. 3: step S1). The document ID only has to be data capable of identifying the document and is data obtained by combining pieces of data such as, for example, a file path, a date and a time, a user name, and a file name.

The list generation unit 103 extracts text data from the data of the document stored in the document data storage unit 101 in step S1 (step S3). In the example of FIG. 2, data of a sentence of " 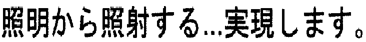 " within a frame corresponds to the text data. For example, software "Apache Tika" may be used for the extraction of the text data. Note that since technologies for extracting text data are well known, detailed descriptions regarding extracting technologies will be omitted here.

The list generation unit 103 performs morphological analysis on the text data extracted in step S3, thereby extracting feature elements (step S5). In the present embodiment, the feature elements are words and are preferably nouns.

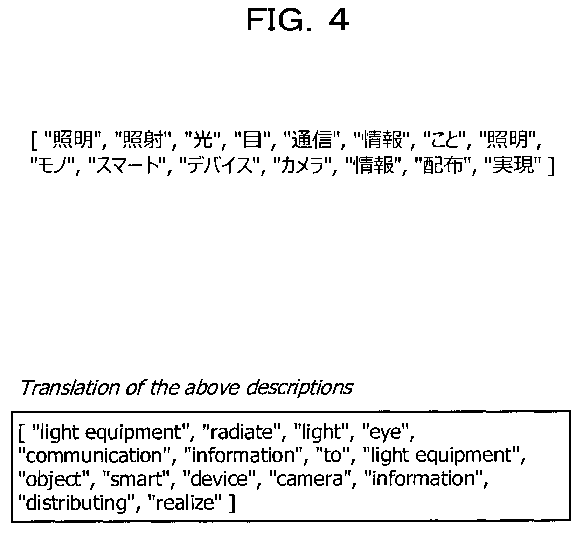

The list generation unit 103 generates a list including the feature elements extracted in step S5 and stores the list in the list storage unit 105 (step S7). FIG. 4 illustrates an example of a list stored in the list storage unit 105. In the example of FIG. 4, nouns included in the text data are stored in order of appearance.

If the list is stored in the list storage unit 105, the sub-list generation unit 107 determines a position of delimitation in the list so that a remainder relating to a modulus (called a divider) m of a hash value calculated for n feature elements preceding the delimitation becomes less than "r" (step S9). From this, one or more sub-lists are generated from the list. The sub-list generation unit 107 stores the generated sub-lists in the sub-list storage unit 109.

Here, "m" and "n" are natural numbers greater than or equal to "2", and "r" is a natural number satisfying 0 < r < m. As an example, it is assumed that a position of delimitation is determined in a case of n = 4, m = 16, and r = 1. In the present embodiment, it is assumed that a hash function h0(e1,e2,...) is a hash function expressing, as a decimal, an application result obtained by applying the secure hash algorithm-1 (SHA-1) to a byte sequence obtained by encoding with the UCS Transformation Format 8 (UTF-8), a character string obtained by concatenating all arguments by using space characters (in other words, spaces). In addition, it is assumed that h1(e1,e2,...): = h0(e1,e2,...) mod m is satisfied. ": =" indicates an assignment operator.

First, since h1(" 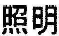 "," 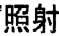 "," 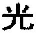 "," 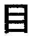 ") = 0 < r is satisfied, the sub-list generation unit 107 determines a position subsequent to a feature element" 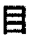 " as a position of delimitation. Since h1(" 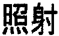 "," 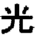 "," 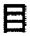 "," 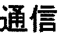 ") = 0 < r is satisfied, the sub-list generation unit 107 determines a position subsequent to a feature element " 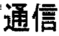 " as a position of delimitation. Since h1(" 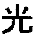 "," 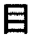 "," 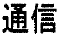 "," 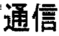 is satisfied, the sub-list generation unit 107 determines a position subsequent to a feature element " 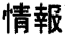 " as a position of delimitation. Since h1(" 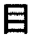 is satisfied, the sub-list generation unit 107 determines that a position subsequent to a feature element " 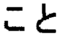 " does not correspond to a position of delimitation. If the processing is performed in the same way, generated sub-lists are [" 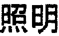 ", " 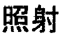 "," 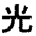 "," 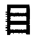 "], [" 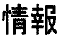 "], [" 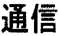 , and [" 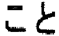 ", " 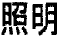 "," 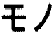 "," 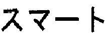 "," 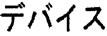 ", " 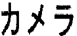 ", " 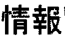 ", " 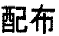 ", " 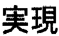 "].

While, in the present embodiment, the hash value is calculated for n feature elements preceding delimitation, the hash value may be calculated by using another method. The hash value may be calculated for, for example, n feature elements subsequent to delimitation. Note that while it is desirable that targets of calculation of the hash value are n consecutive feature elements, targets of calculation of the hash value does not have to be n consecutive feature elements.

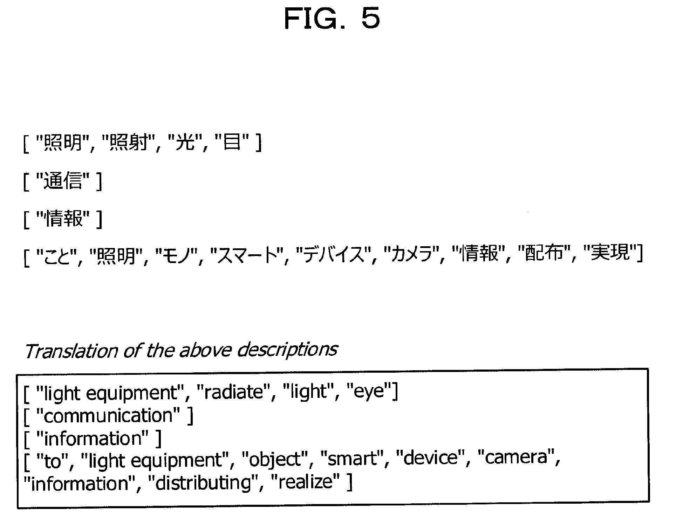

FIG. 5 illustrates examples of sub-lists stored in the sub-list storage unit 109. In the example of FIG. 5, sub-lists generated by delimiting the list at the positions determined in step S9 are stored.

Returning to the description of FIG. 3, the sub-list generation unit 107 removes, from the sub-list storage unit 109, sub-lists, the number of feature elements of each of which is less than "t" ("t" is a natural number) and which are included in the sub-lists stored in the sub-list storage unit 109 (step S11). In some cases, the use of the parameter "t" suppresses excessive detection (in other words, despite the fact that actually no diversion is performed, it is sensed that diversion is performed). Even if no diversion is performed, in a case where the number of feature elements is small, there is a high possibility that a same feature element sequence occurs. Therefore, the use of the parameter "t" suppresses the excessive detection.

If, in the example of FIG. 5, for example, t = 4 is satisfied, sub-lists remaining in the sub-list storage unit 109 are [" 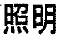 "," 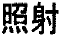 "," 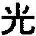 ", " 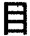 "] and [" 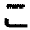 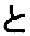 "," 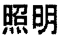 "," 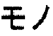 "," 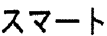 "," 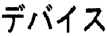 "," 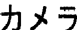 ", 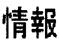 "," 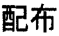 "," 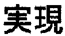 "].

If the processing in the sub-list generation unit 107 finishes, the registration unit 111 calculates a hash value for each of sub-lists stored in the sub-list storage unit 109 and registers, in the feature data storage unit 113, the calculated hash values and the document IDs whose inputs are received in step S1 while associating the calculated hash values and the document IDs with each other (step S13). Then, the processing illustrated in FIG. 3 is terminated.

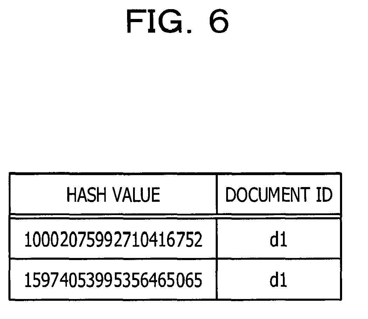

It is assumed that a hash function in step S13 is h2(e1,e2,...): = h0(e1,e2,...) mod 2⁶⁴. If doing in this way, 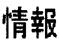 10002075992710416752 and h2(" 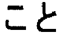 "," 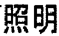 "," 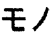 "," 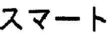 "," 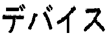 "," 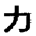 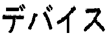 "," 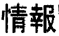 "," 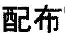 "," 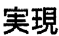 "=15974053995356465065) are satisfied. FIG. 6 illustrates an example in which these numerical values are registered, as pieces of index data, in the feature data storage unit 113. In the example of FIG. 6, hash values and document IDs are stored. Note that the index data may follow another format (for example, a format of a relational database management system (RDMS)).

By performing such processing as described above, it becomes possible to define, as a feature amount expressing a feature of a document, a set whose elements are hash values calculated from sub-lists each including a local feature element. From this, by determining whether there is a common element, it becomes possible to sense that diversion of text data is performed.

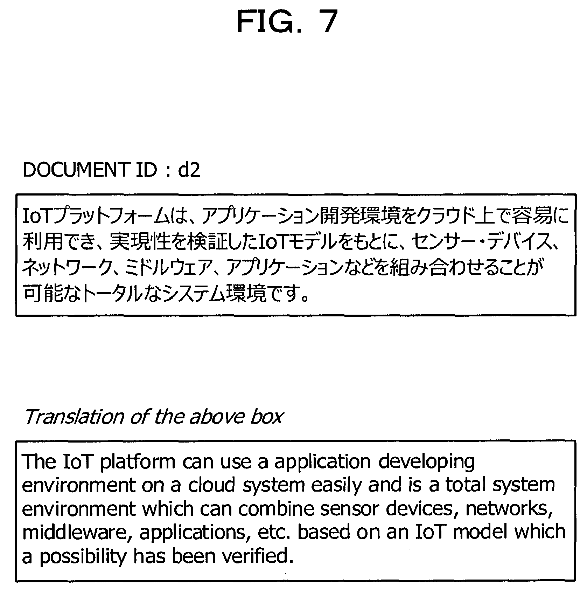

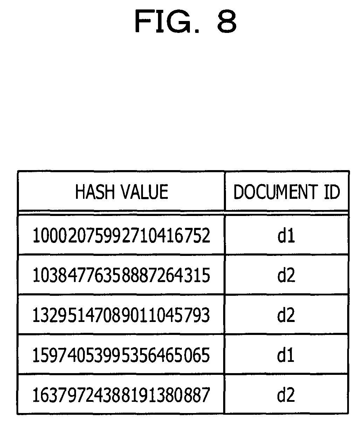

Here, it is assumed that the processing described by using FIG. 3 to FIG. 6 is applied to a document "d2" illustrated in FIG. 7. In this case, generated sub-lists are ["IoT"," 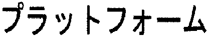 "," 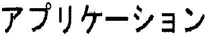 "," 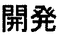 "," 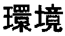 "],[" 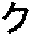 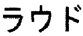 "," 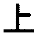 "," 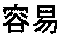 "," 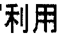 "," 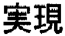 "," 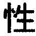 "," 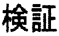 ","IoT"," 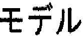 "," 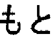 "," 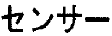 "," 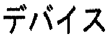 "," 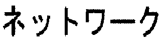 "," 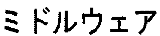 "," 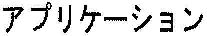 "," 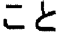 "], and [" 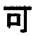 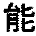 "," 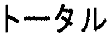 "," 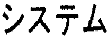 "," 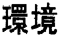 "]. Calculated hash values are "16379724388191380887", "13295147089011045793", and "10384776358887264315" in order. Since the calculated hash values are added to the feature data storage unit 113, index data stored in the feature data storage unit 113 is as illustrated in FIG. 8. As illustrated in FIG. 8, a hash value for the document "d1" and a hash value for the document "d2" are registered as pieces of index data.

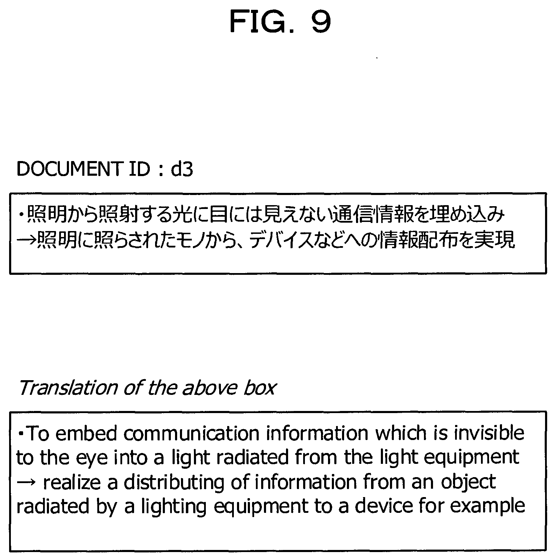

Next, using FIG. 9 to FIG. 11, processing for determining whether a document is a document including a sentence diverted from an existing document will be described. Here, processing for determining whether a document "d3" illustrated in FIG. 9 is a document including a sentence diverted from an existing document will be described.

The processing described by using FIG. 3 to FIG. 6 is applied to the document "d3" illustrated in FIG. 9. In this case, generated sub-lists are [" 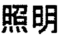 "," 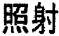 "," 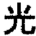 "," 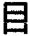 "] and [" 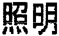 "," 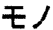 "," 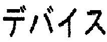 "," 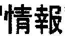 "," 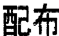 "," 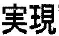 "]. Calculated hash values are "10002075992710416752" and "426719386417036332" in order. In this regard, however, in the present processing, the calculated hash values are not stored in the feature data storage unit 113 as described above but are delivered to the extraction unit 115.

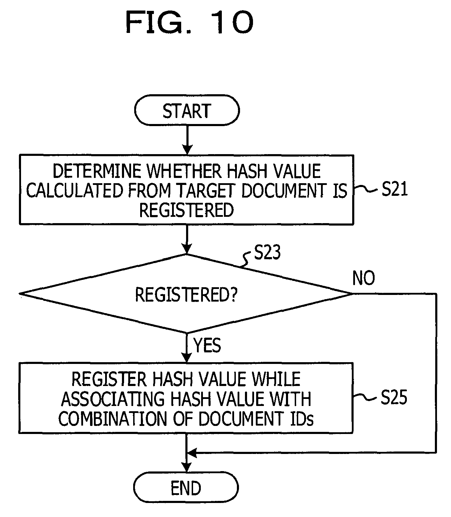

Using FIG. 10, processing performed by the extraction unit 115 will be described. First, the extraction unit 115 determines whether a hash value coinciding with a hash value calculated from a document serving as a target (here, the document "d3") is registered in the feature data storage unit 113 (FIG. 10: step S21).

In a case where no hash value coinciding with the hash value calculated from the document serving as a target (step S23: No), the processing is terminated. On the other hand, in a case where a hash value coinciding with the hash value calculated from the document serving as a target (step S23: Yes), the extraction unit 115 identifies, from the feature data storage unit 113, a document ID associated with the hash value coinciding with the hash value calculated from the document serving as a target. In addition, the extraction unit 115 stores, in the extraction result storage unit 117, the hash value while associating the hash value with a combination of the identified document ID and the document ID of the document serving as a target (step S25). The information processing device 1 displays, on a display device or the like, data stored in the extraction result storage unit 117. Then, the processing illustrated in FIG. 10 is terminated.

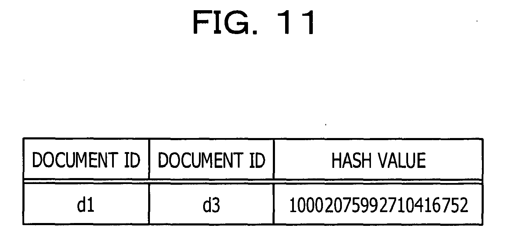

FIG. 11 illustrates an example of data stored in the extraction result storage unit 117. In the example of FIG. 11, a combination of document IDs and a hash value are stored. In the example of FIG. 11, since the hash value corresponding to the sub-list [" 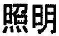 "," 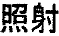 "," 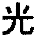 "," 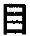 "] generated from the document "d1" and the hash value corresponding to the sub-list [" 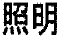 "," 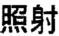 "," 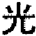 "," 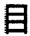 "] generated from the document "d3" coincide with each other, a combination of the document ID of the document "d1" and the document ID of the document "d3" and the hash value are stored.

Note that if the document "d1" and the document "d3" are compared with each other, the anterior half portions are approximately the same while there are many differences specifically in the posterior half portions. In this way, even if formats slightly differ from each other, it is possible to sense that the document "d3" includes a sentence including data diverted from the document "d1". Therefore, it may be said that a method of the present embodiment is a method whose robustness is high. As the reason why the robustness is high, use of feature elements and use of locally calculated values are cited. If words or the like are used as feature elements, the influences of spaces, punctuation marks, and so forth are decreased. Therefore, it becomes possible to deal with various formats and languages. In addition, at the time of detecting diversion regarding a portion, use of locally calculated values decreases the influence of a difference existing in a portion located away from the former portion. Therefore, it becomes possible to partially detect diversion.

In addition, in the present embodiment, hash values are compared, and the degree of similarity is not calculated by accessing data of a document having no diversion relationship. Accordingly, sensing whose comparison efficiency is high is realized.

In addition, by changing the parameters "m" and "r", the size of the feature amount is flexibly changed. The size of a sub-list (or the number of feature elements included in the sub-list) is m / r on average, and it is expected that the size of the feature amount is roughly proportional to r / m. Therefore, if M = am and R = br are used, the size of the feature amount becomes about b / a times, compared with a case of using "m" and "r".

Note that the dispersion of the size of the sub-list decreases with an increase in the value of the parameter "n" and the size of the feature amount is accurately adjusted by "m" and "r". In a case of, for example, n = 1, the size of the sub-list widely varies depending on whether to be delimited subsequent to a feature element that frequently occurs in such a manner as the feature element " 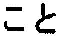 ". In a case of being delimited subsequent to, for example, " 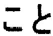 ", being consistently delimited subsequent to " 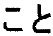 " occurs. Therefore, the number of sub-lists and the size of the feature amount tend to be increased. In contrast, in a case of not being delimited subsequent to, for example, " 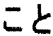 ", the size of the feature amount tends to be decreased. Since whether to be delimited depends on "m" and "r", it is difficult to accurately adjust the size of the feature amount based on "m" and "r". On the other hand, in a case of, for example, n = 2, even if being delimited subsequent to a feature element list [" 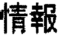 "," 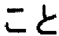 "], the probability of being delimited subsequent to [" 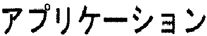 "," 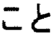 "] is not "1" (is r / m on average), unlike a case of n = 1. Therefore, the influence of a feature element that frequently occurs on the size of the feature amount is reduced. In other words, the size of the feature amount is more accurately adjusted by "m" and "r" as the value of "n" increases. Therefore, in the present embodiment, a hash value is calculated from feature elements (in other words, "n" is a natural number greater than or equal to 2).

Note that, in order to calculate a same hash value for a same input, it is desirable to disable changing of the above-mentioned parameter or hash function during use of a system.

### [Second Embodiment]

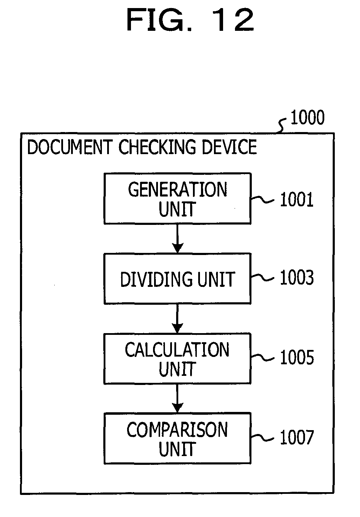

FIG. 12 is a functional block diagram of a document checking device 1000 in a second embodiment. The document checking device 1000 includes a generation unit 1001, a dividing unit 1003, a calculation unit 1005, and a comparison unit 1007.

The generation unit 1001 performs processing and outputs a processing result to the dividing unit 1003. The dividing unit 1003 performs processing, based on the processing result received from the generation unit 1001, and outputs a processing result to the calculation unit 1005. The calculation unit 1005 performs processing, based on the processing result received from the dividing unit 1003, and outputs a processing result to the comparison unit 1009. The comparison unit 1009 performs processing, based on the processing result received from the calculation unit 1007.

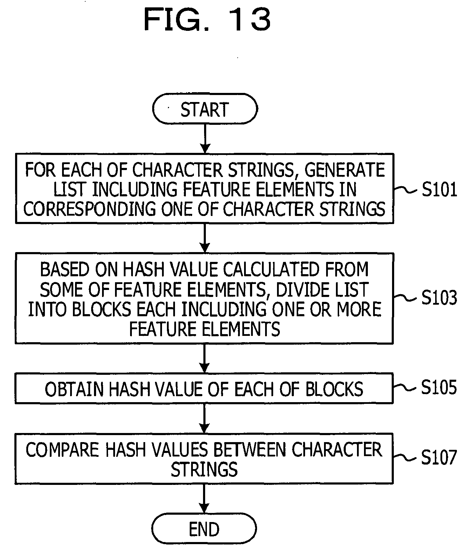

Next, using FIG. 13, processing performed by the document checking device 1000 will be described.

First, for each of character strings, the generation unit 1001 generates a list including feature elements in the corresponding one of the character strings (FIG. 13: step S101).

Based on a hash value calculated from some of feature elements included in a list, the dividing unit 1005 divides the list into blocks each including one or more feature elements (step S103).

The calculation unit 1007 obtains a hash value for each of the blocks (step S105).

The comparison unit 1009 compares the obtained hash values between the character strings and outputs a comparison result based on the comparing (step S107). Then, the processing is terminated.

If doing as described above, similarities between the character strings are highly accurately verified at high speed.

While one embodiment of the present technology is described above, the present technology is not limited to this. The above-mentioned functional block configuration of the information processing device 1 does not have to coincide with, for example, an actual program module configuration.

In addition, each of the above-mentioned tables is just an example and does not have to have such a configuration as described above. Furthermore, in a processing flow, the order of processing operations may be changed as long as a processing result is not changed. Furthermore, the processing operations may be performed in parallel.

In addition, while the present embodiment uses hash values as feature amounts, the feature amounts are not limited to the hash values.

In addition, while Japanese sentences are explained as examples in the above description, the present embodiment may be applied to a language from which feature elements such as nouns are able to be extracted. In addition, processing targets are not limited to natural languages.

In addition, while being arranged in appearance order in a document in the present embodiment, elements within a list generated by the list generation unit 103 are not limited to such an order. Arrangement following, for example, a lexical order may be cited, and redundant element may be deleted. If doing in this way, a case where the word order of words is changed at many points in a document is handled as a similar document. In addition, the same hash value is easily calculated in the lexical order, compared with the appearance order, and accordingly, there is an advantageous effect of enhancing robustness.

In addition, the hash functions are not limited to those described above. Note that since, in step S13, the output of SHA-1 is compressed to a 64-bit space, excessive detection may occur in rare cases. If the compression ratio of an output space is reduced, there is trade-off that the size of a feature amount increases while it is possible to decrease the rate of excessive detection.

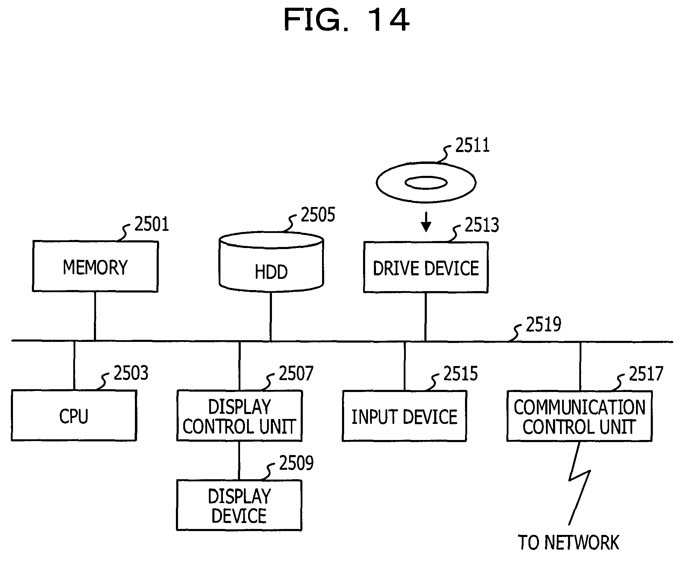

Note that the above-mentioned information processing device 1 and document checking device 1000 are computers and, as illustrated in FIG. 14, a memory 2501, a central processing unit (CPU) 2503, a hard disk drive (HDD) 2505, a display control unit 2507 coupled to a display device 2509, a drive device 2513 for a removable disk 2511, an input device 2515, and a communication control unit 2517 for coupling to a network are coupled to one another by a bus 2519. An operating system (OS) and an application program for implementing processing operations in the present embodiment are stored in the HDD 2505 and are read from the HDD 2505 to the memory 2501 at the time of being executed by the CPU 2503. In accordance with the processing content of the application program, the CPU 2503 controls the display control unit 2507, the communication control unit 2517, and the drive device 2513, thereby causing predetermined operations to be performed. In addition, while being mainly stored in the memory 2501, data in processing may be stored in the HDD 2505. In an example of the present technology, the application program for implementing above-mentioned processing operations is distributed while being stored in the computer-readable removable disk 2511 and is installed from the drive device 2513 onto the HDD 2505. The application program for implementing above-mentioned processing operations is installed onto the HDD 2505 via a network such as the Internet and the communication control unit 2517 in some cases. In such a computer, hardware such as the above-mentioned CPU 2503 and memory 2501 and programs such as the OS and the application program organically collaborate with one another, thereby realizing such various kinds of functions as described above.

The following summarizes the above-mentioned embodiments of the present technology.

The document checking device according to the first mode of the present embodiment includes (A) a generation unit configured to generate, for each of character strings, a list including feature elements in the corresponding one of the character strings, (B) a dividing unit configured to divide, based on a hash value calculated from some of feature elements included in the list, the list into blocks each including one or more feature elements, (C) a calculation unit configured to obtain a hash value for each of the blocks, and (D) a comparison unit configured to compare, between the character strings, the hash values obtained by the calculation unit.

If doing in this way, by using the hash value calculated from some of the feature elements included in the list, similarities between the character strings are highly accurately verified at high speed.

In addition, (b1) by setting delimitation in the list in a case where a result of arithmetic processing performed on the hash value calculated from some of the feature elements satisfies a predetermined condition, the above-mentioned dividing unit may divide the list into blocks. If doing in this way, the delimitation is set at an adequate position.

In addition, some of the feature elements may be feature elements extracted in accordance with an appearance order in a character string. If doing in this way, the feature of the character string is more easily reflected in a hash value.

In addition, some of the feature elements may be successive feature elements. If doing in this way, the feature of the character string is more easily reflected in a hash value.

In addition, the arithmetic processing may be arithmetic processing for obtaining a remainder by dividing a hash value by a predetermined value, and the predetermined condition may include a condition that the remainder falls within a predetermined range. If doing in this way, the size of a block is less likely to be uneven.

In addition, the above-mentioned dividing unit may (b2) set delimitation at a position preceding an initial feature element out of successive one or more feature elements or at a position subsequent to a final feature element out of successive one or more feature elements.

In addition, (c1) in a case where the number of feature elements included in a block is less than a threshold value, the above-mentioned calculation unit may exclude a hash value of the relevant block from targets of comparison based on the above-mentioned comparison unit. If doing in this way, excessive detection is suppressed.

In addition, the feature elements may be nouns.

A document checking method according to the second mode of the present embodiment includes processing for (E) generating, for each of character strings, a list including feature elements in the corresponding one of the character strings, (F) dividing, based on a hash value calculated from some of feature elements included in the list, the list into blocks each including one or more feature elements, (G) obtaining a hash value for each of the blocks, and (H) comparing, between the character strings, the obtained hash values.

Note that a program for causing a computer to perform processing based on the above-mentioned method is able to be created and the relevant program is stored in a computer-readable storage medium or storage device such as, for example, a flexible disk, a CD-ROM, a magneto-optical disk, a semiconductor memory, or a hard disk. Note that an intermediate processing result is temporarily stored in a storage device such as a main memory.

### [REFERENCE SIGNS LIST]

1: information processing device
101: document data storage unit
103: list generation unit
105: list storage unit
107: sub-list generation unit
109: sub-list storage unit
111: registration unit
113: feature data storage unit
115: extraction unit
117: extraction result storage unit
1000: document checking device
1001: generation unit
1003: dividing unit
1005: calculation unit
1007: comparison unit

## Claims

1. A document checking device comprising:
a generation unit configured to generate, for each of character strings, a list including feature elements in the corresponding one of the character strings;
a dividing unit configured to divide, based on a hash value calculated from at least one of feature elements included in the list, the list into blocks each including one or more feature elements;
a calculation unit configured to obtain a hash value for each of the blocks; and
a comparison unit configured to compare the hash values obtained by the calculation unit between the character strings.

2. The document checking device according to claim 1, wherein
the dividing unit is configured to divide the list into the blocks by setting delimitation in the list in a case where a result of arithmetic processing performed on the hash value calculated from the at least one of the feature elements satisfies a predetermined condition.

3. The document checking device according to claim 1 or 2, wherein
the at least one of the feature elements are feature elements extracted in accordance with an appearance order in the corresponding one of the character strings.

4. The document checking device according to claim 1 or 2, wherein
the at least one of the feature elements are successive feature elements in the corresponding one of the character strings.

5. The document checking device according to claim 2, wherein
the arithmetic processing is arithmetic processing for obtaining a remainder by dividing a hash value by a predetermined value, and
the predetermined condition includes a condition that the remainder falls within a predetermined range.

6. The document checking device according to claim 4, wherein
the dividing unit is configured to set the delimitation at a position preceding an initial feature element out of the successive one or more feature elements or at a position subsequent to a final feature element out of the successive one or more feature elements.

7. The document checking device according to any one of claims 1 to 6,
wherein
the calculation unit is configured to exclude a hash value of one of the blocks from targets of comparison based on the comparison unit in a case where the number of feature elements included in the relevant block is less than a threshold value.

8. The document checking device according to any one of claims 1 to 7, wherein the feature elements are nouns.

9. A method of checking a document, the method comprising:
generating, for each of character strings, a list including feature elements in the corresponding one of the character strings;
dividing, based on a hash value calculated from at least one of feature elements included in the list, the list into blocks each including one or more feature elements;
obtaining a hash value for each of the blocks;
comparing the obtained hash values between the character strings; and
outputting a comparison result based on the comparing.

10. The method according to claim 9, further comprising:
dividing the list into the blocks by setting delimitation in the list in a case where a result of arithmetic processing performed on the hash value calculated from the at least one of the feature elements satisfies a predetermined condition.

11. The method according to claim 9 or 10, wherein
the at least one of the feature elements are feature elements extracted in accordance with an appearance order in the corresponding one of the character strings.

12. The method according to claim 9 or 10, wherein
the at least one of the feature elements are successive feature elements in the corresponding one of the character strings.

13. The method according to any one of claims 9 to 12, further comprising:
excluding a hash value of one of the blocks from targets of comparison based on the comparing in a case where the number of feature elements included in the relevant block is less than a threshold value.

14. The method according to any one of claims 9 to 13, wherein the feature elements are nouns.

15. A program which, when executed on a computer, causes the computer to carry out the method according to any one of claims 9 to 14.
